# EUROPEAN PATENT APPLICATION

(11) **EP 4 411 448 A2**
(43) Date of publication of application: **07.08.2024**
(21) Application number: 24183599.0
(22) Date of filing: 27.02.2019
(51) Int. Cl.: G02B 6/44

(54) **UNITUBE OPTICAL FIBER CABLE**

(30) Priority: 31.12.2018 IN 201821050051
(62) Divisional of application: 19159828.3
(71) Applicant: Sterlite Technologies Limited, 431 136 Maharashtra (IN)
(72) Inventor: KUMAR, Sravan, 431136 Maharashtra (IN); MOTURU, Pawan, 431136 Maharashtra (IN); MISHRA, Atul, 431136 Maharashtra (IN); SHUKLA, Vikas, 431136 Maharashtra (IN)
(74) Representative: Sach, Greg Robert

(57) **Abstract**

The present disclosure provides an optical fiber cable (100). The optical fiber cable (100) includes a micro module (106). The micro module (106) lies substantially along a longitudinal axis (104) of the optical fiber cable (100). In addition, the optical fiber cable (100) includes a first layer (110), a second layer (112) and a plurality of strength members (114). The micro module (106) has low smoke zero halogen (LSZH) sheath. The micro module (106) includes a plurality of optical fibers (108). The first layer (110) surrounds the micro module (106) having LSZH sheath. The second layer (112) surrounds the first layer (110). The second layer (112) is a jacket layer. The optical fiber cable (100) has a diameter in a range of about 3.5 ± 0.2 millimeter. The optical fiber cable (100) has a kink diameter of about 1D and a bend diameter of about 7D.

## Description

### BACKGROUND OF THE INVENTION

### Field of the Invention.

The present disclosure relates to a field of optical fiber cables. More particularly, the present disclosure relates to a uni-tube optical fiber cables for indoor, outdoor and underground applications.

### Description of the related art.

In the present scenario, optical fiber cables have secured an important position in building network of modern communication systems across the world. The optical fiber cables are sensitive to conditions like crushes, kinks, bends and presence of water and/or moisture. Specifically, the ingression of water and other waste in due course of time degrade or destroy the optical fiber cables. Traditionally, the structure of optical fiber cables includes a buffer tube that encloses one or more optical fibers in a buffer tube sheath. The buffer tube sheath protects the optical fibers from physical damage. In general, the buffer tubes are stranded and surrounded by tapes, binding heads (or yarn layer) and an outer sheathing layer. The binding heads (or yarn layer) covers the tapes. These binding heads restrains the movement of the buffer tubes.

The conventional structures have many drawbacks. The conventional structure includes strength members embedded inside the jacket of the cable. The strength members has large diameter due to which the thickness of jacket needs to be increased. This leads to a larger diameter of the optical fiber cable. In addition, the thickness of the material of the jacket and higher diameter of strength members enables higher kink diameter and bend diameter of the cable.

In light of the above stated discussion, there is a need for a robust, efficient and durable optical fiber cable that overcomes the above stated disadvantages.

### SUMMARY OF THE INVENTION

In an aspect, the present disclosure provides an optical fiber cable. The optical fiber cable includes a micro module. The micro module lies substantially along a longitudinal axis of the optical fiber cable. The optical fiber cable includes a plurality of strength members. The micro module includes a plurality of optical fibers. The plurality of optical fibers is in a range of about 1 to 12. The plurality of strength members is of fiber reinforced plastic. The plurality of strength members is embedded in a second layer of the optical fiber cable. Each of the plurality of strength members has a diameter in a range of about 0.4 ± 0.2 millimeter. The optical fiber cable has a diameter in a range of about 3.5 ± 0.2 millimeter. The optical fiber cable has a kink diameter of about 1D and a bend diameter of about 7D. The kink diameter of about 1D and the bend diameter of about 7D provide high flexibility to the optical fiber cable.

A primary object of the present disclosure is to provide an optical fiber cable with high flexibility.

Another object of the present disclosure is to provide the optical fiber cable that has low value of kink diameter.

Yet another of the present disclosure is to provide the optical fiber cable that has low bending diameter.

Yet another object of the present disclosure is to provide the optical fiber cable which would be suitable for both indoor and outdoor applications.

Yet another object of the present disclosure is to provide the optical fiber cable which would be suitable for storage and distribution in FTTH box.

Yet another object of the present disclosure is to provide the optical fiber cable that has reduced diameter of the strength members.

In an embodiment of the present disclosure, the micro module has low smoke zero halogen (LSZH) sheath.

In an embodiment of the present disclosure, the micro module is made of low smoke zero halogen (LSZH). The micro module has a first diameter of about 0.9 ± 0.05 millimeter and a second diameter of about 1.1 ± 0.05 millimeter corresponding to 6 optical fibers.

In an embodiment of the present disclosure, the micro module with LSZH sheath has thickness of about 0.1 ± 0.05 millimeter.

In an embodiment of the present disclosure, the optical fiber cable includes a first layer. The first layer surrounds the micro module having low smoke zero halogen sheath.

In an embodiment of the present disclosure, the optical fiber cable includes a first layer. The first layer is made of a plurality of aramid yarns. The plurality of aramid yarns includes 6 aramid yarns. In addition, the first layer has a thickness of about 0.4 millimeter.

In an embodiment of the present disclosure, the optical fiber cable includes a second layer. The second layer surrounds a first layer. The second layer is a jacket layer.

In an embodiment of the present disclosure, the optical fiber cable includes a second layer. The second layer is made of low smoke zero halogen. The second layer has a thickness in a range of about 1.0 ± 0.1 millimeter.

In an embodiment of the present disclosure, the optical fiber cable includes a plurality of strength members. The plurality of strength members includes 2 strength members positioned diagonally opposite to each other and embedded in a second layer.

In an embodiment of the present disclosure, the optical fiber cable includes a plurality of strength members. The plurality of strength members is made of fiber reinforced plastic. In addition, each of the plurality of strength members has a diameter in a range of about 0.4 ± 0.2 millimeter.

In an embodiment of the present disclosure, the optical fiber cable has a pulling strength of about 400 Newton.

In an embodiment of the present disclosure, the optical fiber cable with unitube construction enables reduced cable termination time.

In an embodiment of the present disclosure, the kink diameter of about 1D and the bend diameter of about 7D provide flexibility to the optical fiber cable.

### BRIEF DESCRIPTION OF DRAWING

Having thus described the disclosure in general terms, reference will now be made to the accompanying figures, wherein:

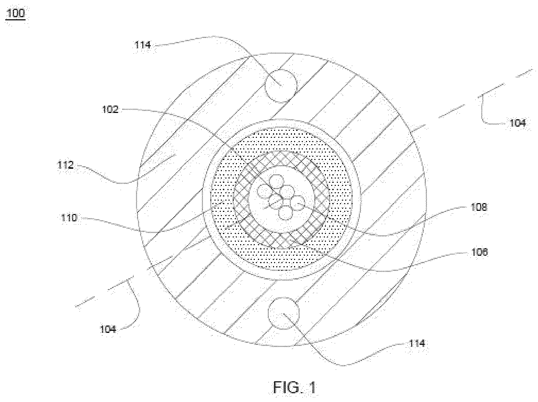

FIG. 1 illustrates a cross sectional view of an optical fiber cable for indoor and outdoor applications, in accordance with various embodiments of the present disclosure.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
- 100.: Optical fiber cable.
- 102.: The geometrical center.
- 104.: The longitudinal axis.
- 106.: The micro module.
- 108.: Plurality of optical fibers.
- 110.: The first layer.
- 112.: The second layer.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

FIG. 1 illustrates a cross-sectional view of an optical fiber cable 100 for indoor and outdoor applications, in accordance with an embodiment of the present disclosure. In general, the optical fiber cable 100 is a type of cable having a number of optical fibers present inside a buffer tube/ loose tube. In addition, the optical fiber cable 100 is used for the communication purposes such as to transfer digital data signals in the form of light from one end to another end. In general, the indoor applications of optical fiber cable represent the use of optical fiber cable for building wiring applications. In general, the outdoor applications of optical fiber cable represent the use of optical fiber cable for aerial and duct applications. Further, the cross sectional view of the optical fiber cable 100 describes a structure and distribution of discrete elements of the optical fiber cable 100. The structure of the optical fiber cable 100 includes a micro module 106, a plurality of optical fibers 108, a first layer 110, a second layer 112 and a plurality of strength members 114.

The optical fiber cable 100 is a unitube drop cable. The optical fiber cable 100 with unitube construction enables reduced cable termination time. The optical fiber cable 100 is defined along a longitudinally axis 104 passing through a geometrical center 102 of the optical fiber cable 100. In general, the longitudinal axis 104 is an imaginary axis along the lengthwise direction of the figure or body, usually passing through its center of gravity or geometrical center. In general, the geometrical center 102 is the central point of the optical fiber cable 100. In other words, the geometrical center 102 can be defined as the midpoint of the diameter of the optical fiber cable 100.

The optical fiber cable 100 is an indoor unitube drop cable engineered for efficient indoor installations, featuring streamlined deployment, minimal emission of toxic byproducts in case of combustion, compact dimensions, enhanced flexibility for easy handling, and optimized tensile strength. This cable's design facilitates swift and straightforward installation processes, ensuring compliance with safety regulations by minimizing the generation of harmful fumes or particles upon combustion. Its compact size allows seamless integration into indoor spaces, while superior flexibility enables convenient routing and handling in tight or confined areas. With optimized tensile strength, the cable withstands typical installation and operational stresses, ensuring durability and reliability in diverse indoor environments.

The optical fiber cable 100 includes the micro module 106. The micro module 106 is a tube for encapsulating the plurality of optical fibers 108. In addition, the micro module 106 lies along the longitudinal axis 104 of the optical fiber cable 100. The longitudinal axis 104 is passing through the geometrical center 102. The micro module 106 is made of low smoke zero halogen material (LSZH). In an embodiment of the present disclosure, the micro module is made of any other suitable material. Further, the micro module 106 with LSZH sheath encloses the plurality of optical fibers 108. Furthermore, the LSZH sheath of the micro module 106 provides flexibility to the optical fiber cable 100. In general, the LSZH material is composed of thermoplastic or thermoset compounds that emit limited smoke and no halogen when exposed to high sources of heat.

In general, the micro module 106 provides mechanical isolation, physical damage protection and identification of each of the plurality of optical fibers 108. In addition, the micro module 106 may tear off by bare hands. The tear of the micro module 106 by bare hands facilitates monitoring structural defects in the plurality of optical fibers 108.

The micro module 106 has a first diameter of about 0.9 ± 0.05 millimeter and a second diameter of about 1.1 ± 0.05 millimeter corresponding to 6 optical fibers. The first diameter is the inner diameter and the second diameter is the outer diameter of the micro module 106. In addition, the micro module made of LSZH has a thickness of about 0.1 ± 0.05 millimeter. In an embodiment of the present disclosure, the micro module may have any suitable diameter. In an embodiment of the present disclosure, the micro module 106 may have thickness in any suitable range.

The micro module 106 includes the plurality of optical fibers 108. The micro module 106 includes a number of optical fibers in a range of about 1 optical fiber to 12 optical fibers. In an embodiment of the present disclosure, the micro module 106 includes 6 optical fibers. In another embodiment of the present disclosure, the micro module 106 may include any number of optical fibers. In an embodiment of the present disclosure, the plurality of optical fibers 108 is arranged loosely inside the micro module 106. In another embodiment of the present disclosure, the plurality of optical fibers 108 is arranged in the form of ribbon. The utilization of optical fibers 108 arranged in the form of a ribbon may facilitate mass splicing operations, thereby streamlining the installation process and enhancing efficiency, particularly in indoor applications. This ribbon configuration enables multiple fibers to be spliced simultaneously, expediting deployment and minimizing installation time. Additionally, the ribbon employed in the unitube optical fiber cable is an intermittently bonded ribbon (IBR), distinguished by its flexible and robust nature. This unique ribbon design enhances ease of handling and facilitates faster installation processes. In addition, each of the plurality of optical fibers 108 is a colored optical fiber.

In general, the optical fiber is a fiber used for transmitting information as light pulses from one end to another. In addition, the optical fiber is a thin strand of glass or plastic capable of transmitting optical signals. Further, the optical fiber is configured to transmit large amount of information over long distances. Furthermore, the optical fiber includes a core region and a cladding region. The core region is an inner part of the optical fiber and the cladding section is an outer part of the optical fiber. The cladding region surrounds the core region. Moreover, the core region and the cladding region are formed during the manufacturing stage of the optical fiber. The core region has a refractive index which is greater than a refractive index of the cladding region. In an embodiment of the present disclosure, the core region has a higher refractive index than the cladding region to transmit information from one end to another end. In an embodiment of the present disclosure, the optical fiber is a single mode optical fiber. In another embodiment of the present disclosure, the optical fiber is a multimode optical fiber.

The unitube cable 100, with its compact design, presents a favourable alternative to multitube cable configurations, particularly well-suited for indoor applications. An integral feature of this design is the micro module tube 106, constructed from a hand-tearable material, eliminating the need for specialized tools during installation and facilitating convenient access to fibers. Moreover, the micro module tube 106 may be fabricated using a Low Smoke Zero Halogen (LSZH) material, ensuring minimal smoke emission and absence of halogen when subjected to high temperatures, rendering the cable 100 an optimal choice for indoor environments where safety and ease of installation are paramount considerations.

The optical fiber cable 100 includes the first layer 110. The first layer 110 surrounds the micro module 106. The first layer 110 is made of a plurality of aramid yarns. In an embodiment of the present disclosure, the number of aramid yarns in the first layer 110 is 6. In another embodiment of the present disclosure, the number of aramid yarns may vary according to the tensile requirement. In general, aramid yarns are highly resistant to temperature, chemical degradation and abrasion. The first layer 110 reduces the stress on the optical fibers in high tensile load environment. In an embodiment of the present disclosure, the thickness of the first layer 110 is about 0.4
mm. In another embodiment of the present disclosure, the thickness of the first layer 110 may vary as per the tensile requirement. In an embodiment of the present disclosure, the first layer 110 has a linear density of about 1610 Decitex. In general, linear density is measure of a quantity of any characteristic value per unit of length.

The optical fiber cable 100 includes the second layer 112. The second layer 112 surrounds the first layer 110. In addition, the second layer 112 is a jacket layer of the optical fiber cable 100. The jacket is made of Low Smoke Zero Halogen material (LSZH). In general, the LSZH material provides flexibility and safety to the optical fiber cable 100. In an embodiment of the present disclosure, the jacket is made of any suitable material. Further, the second layer 112 provides the optical fiber cable 100 an inherent ability to resist crushes, kinks and tensile stress. In an embodiment of the present disclosure, the second layer 112 has a thickness of about 1.0 ± 0.1 millimeter. In another embodiment of the present disclosure, the second layer 112 may have any suitable thickness.

The unitube drop cable 100 may be constructed with a sheath 112 made from Low Smoke Zero Halogen (LSZH) material, that emits minimal smoke and containing no halogen when subjected to high temperatures. This attribute, coupled with the LSZH-based micro module tube 106, enhances the cable's suitability for indoor applications, offering increased safety and reduced environmental impact. The utilization of LSZH materials throughout the cable's construction reinforces its position as a preferred solution for indoor installations.

In an embodiment of the present disclosure, the optical fiber cable 100 includes an empty space in between the first layer 110 and the second layer 112. In an example, the optical fiber cable 100 includes the empty space of about Y millimeter in between the first layer 110 and the second layer 112 for better optical performance of the cable.

The optical fiber cable 100 includes the plurality of strength members 114. The plurality of strength members 114 is embedded inside the second layer 112. Each of the plurality of strength members 114 is made of fiber reinforced plastics (FRPs). The number of strength members embedded inside the second layer 112 is 2. In an embodiment of the present disclosure, the number of strength members embedded inside the second layer 112 may vary. In an embodiment of the present disclosure, each of the plurality of strength members 114 is circular in cross section. The plurality of strength members 114 extends longitudinally in the second layer 112 along the length of the optical fiber cable 100. In addition, the plurality of strength members 114 provides robustness and tensile strength to the optical fiber cable 100. The plurality of strength members 114 acts as anti-buckle or anti-shrink elements. Further, the plurality of strength members 114 prevents the second layer 112 from shrinkage.

The plurality of strength members 114 is positioned diametrically opposite in a vertical plane in the second layer 112 of the optical fiber cable 100. In an embodiment of the present disclosure, the location of each of the plurality of strength members 114 is diametrically opposite in a horizontal plane. The diameter of each of the plurality of strength members 114 is about 0.4 ± 0.2 millimeter. In an embodiment of the present disclosure, the diameter of each of the plurality of strength members 114 may vary. The plurality of strength members 114 is embedded inside the second layer 112 to provide a pulling strength of about 400 Newton to the optical fiber cable 100. In general, the pulling strength is defined as strength of a cable when pulled through a conduit.

The optical fiber cable 100 has a crush resistance of about 200 Newton per 100 millimeters. In general, the crush resistance determines the ability of the optical fiber cable 100 to withstand and/or recover from the effects of compressive forces. In addition, the optical fiber cable 100 has impact strength of about 10 Newton-meter. In general, the impact strength is the ability of the optical fiber cable 100 to absorb shock and impact energy without breaking. Further, the optical fiber cable 100 has torsion of about 180 degrees. In general, torsion is the twisting of an object due to an applied torque. The optical fiber cable 100 has maximum tensile strength of about 400 Newton. In general, the tensile strength corresponds to a resistance shown by the optical fiber cable 100 against breaking when pressure is applied. The optical fiber cable 100 has temperature performance of about -10 degree Celsius to + 60 degree Celsius during installation. The optical fiber cable 100 has temperature performance of about -20 degree Celsius to +70 degree Celsius during operation. The optical fiber cable 100 has temperature performance of about -20 degree Celsius to +70 degree Celsius during storage. In an embodiment of the present disclosure, the optical fiber cable 100 has any suitable value of crush resistance, torsion and impact strength. Furthermore, the optical fiber cable 100 has a weight in a range of about 14 ± 2 kilogram per kilometer. In an embodiment, the optical fiber cable 100 may have any suitable value of cable weight.

The present unitube optical fiber cable features a sheath 112 equipped with a plurality of embedded strength members 114, composed of reinforced plastics, integrated to provide essential tensile strength for hanging, pulling operations during installations, and under operational conditions. These embedded strength members 114 are embedded in sheath 112 to ensure that the tensile load is effectively isolated from the optical fibers housed within the cable, safeguarding their integrity and performance. Further, the size of the embedded strength members 114 may range between 0.2mm to 0.6mm, facilitating a reduction in sheath thickness, consequently reducing the overall cable size and weight, rendering it well-suited for indoor applications. Moreover, to augment tensile strength marginally without compromising bending flexibility during installation, aramid yarns 110 may be introduced above the micro module tube 106, ensuring optimal performance and ease of deployment in indoor environments.

The optical fiber cable 100 has a diameter of about 3.5 ± 0.2 millimeter. In an embodiment of the present disclosure, the optical fiber cable 100 may have any suitable diameter. The micro module 106 with the LSZH sheath forms the core of the optical fiber cable 100. In addition, the core of the optical fiber cable 100 has a diameter of about 1.1 millimeter. The core of the optical fiber cable 100 with the first layer 110 of aramid yarns has a diameter of about 1.5 millimeter. The optical fiber cable 100 with unitube construction enables reduced cable termination time. Further, the optical fiber cable 100 has a kink diameter of about 1D of the optical fiber cable 100. The kink diameter is defined as the minimum diameter of curvature which can be imposed on a straight, tubular vascular prosthesis without causing a kink in the longitudinal axis of its wall. Furthermore, the optical fiber cable 100 has a bending diameter of about 7D. The bending diameter can be defined as the minimum diameter one can bend a pipe, tube, sheet, cable or hose without kinking it, damaging it, or shortening its life. In addition, smaller is the bend radius, the greater is the material flexibility. The optical fiber cable 100 is used for the indoor, outdoor and aerial applications. In an example, the optical fiber cable 100 is used for storage and distribution purposes in FTTH.

The optical fibers 108 incorporated into the unitube optical fiber cable 100 are may be defined by small diameter, measuring less than 215 micrometers, enabling efficient packing of optical fibers 108 within a correspondingly compact micro module tube 106, thereby reducing the overall dimensions and weight of the cable 100. Consequently, the cable becomes suited for indoor applications, where space constraints and ease of installation are critical considerations. The utilization of small-diameter fibers not only enhances the cable's flexibility and handling but also contributes to its suitability for diverse indoor environments, ensuring optimal performance and ease of deployment.

The optical fiber cable has numerous advantages over the prior art. The plurality of strength members is embedded inside the second layer to provide a pulling strength of about 400 Newton to the optical fiber cable. In addition, the LSZH sheath of the micro module, the LSZH jacket over the optical fiber cable and lesser diameter of the plurality of strength members makes the optical fiber cable more flexible. The optical fiber cable has very less termination time due to easy stripping of the micro module. The optical fiber cable is highly flexible with very less kink diameters.

The foregoing descriptions of specified embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments, so.

The above specification provides examples of how certain inventive aspects may be put into practice. It will be appreciated that the inventive aspects can be practiced in other ways than those specifically shown and described herein without departing from the spirit and scope of the inventive aspects of the present disclosure.

### CLAUSES

1. An optical fiber cable (100) comprising:
   a micro module (106) lying substantially along a longitudinal axis (104) of the optical fiber cable (100), wherein the micro module (106) comprises a plurality of optical fibers (108), wherein the plurality of optical fibers (106) is in a range of about 1 to 12, and
   wherein the optical fiber cable (100) has a diameter in a range of about 3.5 ± 0.2 millimeter, wherein the optical fiber cable (100) has a kink diameter of about 1D and a bend diameter of about 7D, wherein the optical fiber cable (100) is a unitube drop cable.
2. The optical fiber cable (100) as claimed in clause 1, wherein the micro module (106) has low smoke zero halogen (LSZH) sheath.
3. The optical fiber cable (100) as claimed in any preceding clause, wherein the micro module (106) with LSZH sheath has thickness of about 0.1 ±0.05 millimeter.
4. The optical fiber cable (100) as claimed in any preceding clause, further comprising a first layer (110), wherein the first layer (110) surrounds the micro module (106) having low smoke zero halogen (LSZH) sheath.
5. The optical fiber cable (100) as claimed in any preceding clause, further comprising a first layer (110), wherein the first layer (110) is made of a plurality of aramid yarns, wherein the plurality of aramid yarns comprises 6 aramid yarns, wherein the first layer (110) has a thickness of about 0.4 millimeter.
6. The optical fiber cable (100) as claimed in any preceding clause, further comprising a second layer (112), wherein the second layer (112) surrounds a first layer (110), wherein the second layer is a jacket layer.
7. The optical fiber cable (100) as claimed in any preceding clause, further comprising a second layer (112), wherein the second layer (112) is made of low smoke zero halogen material, wherein the second layer (112) has a thickness in a range of about 1.0 ± 0.1 millimeter.
8. The optical fiber cable (100) as claimed in any preceding clause, further comprising a plurality of strength members (114), wherein the plurality of strength members (114) comprises 2 strength members positioned diagonally opposite to each other and embedded in a second layer (112).
9. The optical fiber cable (100) as claimed in any preceding clause, further comprising a plurality of strength members (114), wherein the plurality of strength members (114) is made of fiber reinforced plastic, wherein each of the plurality of strength members (114) has a diameter in a range of about 0.4 ± 0.2 millimeter.
10. An optical fiber cable (100) comprising:
   a micro module (106) lying substantially along a longitudinal axis (104) of the optical fiber cable (100), wherein the micro module (106) comprises a plurality of optical fibers (108), wherein the plurality of optical fibers (106) is in a range of about 1 to 12, and
      a plurality of strength members (114), wherein the plurality of strength members (114) is made of fiber reinforced plastic (114), wherein the plurality of strength members (114) is embedded in a second layer (112) of the optical fiber cable (100), wherein each of the plurality of strength members (114) has a diameter in a range of about 0.4 ± 0.2 millimeter,
      wherein the optical fiber cable (100) has a diameter in a range of about 3.5 ± 0.2 Millimeter, wherein the optical fiber cable (100) has a kink diameter of about 1D and a bend diameter of about 7D, wherein the kink diameter of about 1D and the bend diameter of about 7D provide high flexibility to the optical fiber cable (100), wherein the optical fiber cable (100) is a unitube drop cable and wherein the optical fiber cable (100) with unitube construction enables reduced cable termination time.
11. The optical fiber cable (100) as claimed in any preceding clause, wherein the micro module (106) has low smoke zero halogen (LSZH) sheath, wherein the micro module (106) with LSZH sheath has thickness of about 0.1 ± 0.05 millimeter.
12. The optical fiber cable (100) as claimed in any preceding clause, wherein the micro module (106) is made of low smoke zero halogen (LSZH), wherein the micro module (106) has a first diameter of about 0.9 ± 0.05 millimeter and a second diameter of about 1.1 ± 0.05 millimeter corresponding to 6 optical fibers.
13. The optical fiber cable (100) as claimed in any preceding clause, further comprising a first layer (110), wherein the first layer (110) surrounds the micro module {106) having low smoke zero halogen (LSZH) sheath, wherein the first layer (110) is made of a plurality of aramid yarns, wherein the plurality of aramid yarns comprises 6 aramid yarns, wherein the first layer (110) has a thickness of about 0.4 millimeter.
14. The optical fiber cable (100) as claimed in any preceding clause, wherein the second layer (112) surrounds a first layer (110), wherein the second layer (112) is a jacket layer, wherein the second layer (112) is made of low smoke zero halogen material, wherein the second layer (112) has a thickness in a range of about 1.0 ± 0.1 millimeter.
15. The optical fiber cable (100) as claimed in any preceding clause, wherein the optical fiber cable (100) has a pulling strength of about 400 Newton.
16. An optical fiber cable (100) comprising:
   a micro module (106) lying substantially along a longitudinal axis (104) of the optical fiber cable (100), wherein the micro module (106) is made of low smoke zero halogen (LSZH) material, wherein the micro module (106) comprises a plurality of optical fibers (108), wherein the plurality of optical fibers (106) is in a range of about 1 to 12,and
   wherein the optical fiber cable (100) has a diameter in a range of about 3.5 ± 0.2 millimeter, wherein the optical fiber cable (100) has a kink diameter of about 1D and a bend diameter of about 70, wherein the kink diameter of about 1D and the bend diameter of about 7D provides high flexibility to the optical fiber cable (100), wherein the kink diameter of about 1D and the bend diameter of about 7D provide high flexibility to the optical fiber cable (100), wherein the optical fiber cable (100) is a unitube drop cable and wherein the optical fiber cable (100) with unitube construction enables reduced cable termination time.
17. The optical fiber cable (100) as claimed in any preceding clause, further comprising a plurality of strength members (114), wherein the plurality of strength members (114) is made of fiber reinforced plastic, wherein the plurality of strength members (114) is embedded in a second layer (112) of the optical fiber cable (100), wherein each of the plurality of strength members (114) has a diameter in a range of about 0.4 ± 0.2 millimeter.

## Claims

1. A unitube optical fiber cable (100) comprising:
a hand tearable micro module tube (106) lying substantially along a longitudinal axis (104) of the optical fiber cable (100), wherein the micro module tube (106) encloses a plurality of optical fibers (108), wherein the plurality of optical fibers (108) is in a range of about 1 to 12, and
a sheath (112) surrounding the micro module tube (106)
where the sheath (112) is made of low smoke zero halogen material (LSZH).

2. The optical fiber cable (100) as claimed in claim 1, wherein the micro module tube (106) is made of low smoke zero halogen material (LSZH).

3. The optical fiber cable (100) as claimed in claim 1, further comprising a plurality of strength members (114), wherein the plurality of strength members (114) is embedded in the sheath (112).

4. The optical fiber cable (100) as claimed in claim 3, wherein the plurality of strength members (114) are between 2 to 4 in numbers.

5. The optical fiber cable (100) as claimed in claim 3, wherein the plurality of strength members (114) has a diameter in a range of about 0.4 ± 0.2 millimeter.

6. The optical fiber cable (100) as claimed in claim 1, further comprising a first layer (110) surrounding the micro module tube (106), wherein the first layer (110) is made of a plurality of aramid yarns.

7. The optical fiber cable (100) as claimed in claim 1, wherein the optical fiber cable (100) has a pulling strength of 200 to 400 Newton.

8. The optical fiber cable (100) as claimed in claim 1, wherein the plurality of optical fibers (108) is in a form of an optical fiber ribbon.

9. The optical fiber cable (100) as claimed in claim 8, wherein the ribbon is an intermittently bonded ribbon.

10. The optical fiber cable (100) as claimed in claim 1, wherein the plurality of optical fibers (108) has a diameter of less than or equal to 215 micrometer.
